(19) Europäisches Patentamt
European Patent Office
Office européen des brevets

(11) **EP 4 379 891 A1**

(12) **EUROPEAN PATENT APPLICATION**
published in accordance with Art. 153(4) EPC

(43) Date of publication:
**05.06.2024 Bulletin 2024/23**

(21) Application number: **23855804.3**

(22) Date of filing: **25.01.2023**

(51) International Patent Classification (IPC):
**H01M 10/0569** (2010.01)   **H01M 10/052** (2010.01)
**H01M 4/38** (2006.01)

(52) Cooperative Patent Classification (CPC):
**H01M 4/38; H01M 10/052; H01M 10/0569;**
Y02E 60/10

(86) International application number:
**PCT/KR2023/001147**

(87) International publication number:
**WO 2024/048874 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 KR 20220110382**

(71) Applicant: **LG ENERGY SOLUTION, LTD.**
**Seoul 07335 (KR)**

(72) Inventors:
• **KWACK, Ho-Beom**
  **Yuseong-gu, Daejeon 34122 (KR)**
• **LEE, Jae-Gil**
  **Yuseong-gu, Daejeon 34122 (KR)**
• **LEE, Chang-Hoon**
  **Yuseong-gu, Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTROLYTE FOR LITHIUM-SULFUR BATTERY AND LITHIUM-SULFUR BATTERY COMPRISING SAME**

(57)     The present disclosure relates to an electrolyte for a lithium-sulfur battery and a lithium-sulfur battery comprising the same, and the electrolyte for the lithium-sulfur battery comprises a lithium salt and a nonaqueous solvent, wherein the nonaqueous solvent comprises glycol ether, cyclic ether and acyclic ether represented by the following chemical formula 1, the acyclic ether is included in an amount of 15 vol% or less based on the total volume of the nonaqueous solvent, and a ratio of a total volume of the glycol ether to a total volume of the acyclic ether is 5 or more:

[Chemical formula 1]          $R^1\text{-}O\text{-}R^2$

where $R^1$ is an unsubstituted or substituted $C_1$ to $C_3$ alkyl group, and $R^2$ is an unsubstituted or substituted $C_3$ to $C_{20}$ alkyl group.

EP 4 379 891 A1

FIG. 1a

**25℃ 0.1C**

**Description**

TECHNICAL FIELD

The present disclosure relates to an electrolyte for a lithium-sulfur battery and a lithium-sulfur battery comprising the same.

This application claims priority to Korean Patent Application No. 10-2022-0110382 filed on August 31, 2022, the disclosure of which is incorporated herein by reference in their entirety.

BACKGROUND ART

A lithium-sulfur battery is a battery system using a sulfur-based material having a sulfur-sulfur (S-S) bond for a positive electrode active material and a lithium metal for a negative electrode active material. Sulfur, the main component of the positive electrode active material, is abundant in nature and can be found around the world, is non-toxic and has low atomic weight.

As secondary batteries are used in a wide range of applications including electric vehicles (EVs) and energy storage systems (ESSs), attention is drawn to lithium-sulfur batteries theoretically having higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic $S_8$ structure, and it is converted to lithium polysulfide (LiSx) by the reduction reaction and is completely reduced to lithium sulfide ($Li_2S$).

In this instance, the sulfur-based compound as the positive electrode active material has low reactivity with electrons and lithium ions when it is in solid phase, due to low electrical conductivity characteristics of sulfur. Accordingly, to improve the reactivity of sulfur in lithium-sulfur batteries, studies have been made to develop technology for producing intermediate polysulfide of $Li_2S_x$ to induce liquid phase reaction and improve the reactivity. These technologies use, as the solvent of the electrolyte, ether-based solvents in which lithium polysulfide dissolves well, such as dioxolane, dimethoxy ethane (DME). By this reason, the reactivity of sulfur and the battery life are affected by the amount of the electrolyte.

Recently, lithium-sulfur secondary batteries capable of low temperature operation required for aircraft and next-generation electric vehicles are under many research and development. However, in the lithium-sulfur secondary batteries, due to the elution of polysulfide (PS) from the positive electrode, the material resistance of the electrolyte increases, and accordingly, operation at low temperature is still challenging.

To sum, the Li-S batteries undergo solid->liquid reaction during which the active material is eluted in the form of PS from the positive electrode during the first discharge (~2.3V) and liquid->solid reaction during which the eluted PS moves to the positive electrode through the second discharge (~2.1V). Under this working principle, the largest amount of PS is eluted in the electrolyte at the end of the first discharge (State of Charge(SOC)=70) in which solid->liquid reaction is finished, and in this instance, the greatest overvoltage occurs in the lithium-sulfur batteries. During operation at low temperature, at SOC70 at which the largest amount of PS is eluted in the electrolyte of which properties, for example, viscosity is deteriorated due to the low temperature operation, in particular, great overvoltage occurs and impedes the low temperature operation of the lithium-sulfur batteries.

In addition, when using the ether-based solvents developed as the electrolyte of the lithium-sulfur batteries, gas is produced in the batteries during the low temperature operation of the lithium-sulfur batteries due to low boiling point (bp) of the ether-based solvents, and thus there are explosion risks.

Accordingly, there is a need for the development of lithium-sulfur batteries with the controlled elution characteristics of polysulfide from the positive electrode, the controlled material resistance of the electrolyte and improved stability during low temperature operation.

DISCLOSURE

Technical Problem

The present disclosure is designed to solve the above-described problem, and therefore the present disclosure is directed to providing an electrolyte for a lithium-sulfur battery with improved resistance characteristics by controlling the elution characteristics of polysulfide (PS) from a positive electrode.

In particular, the present disclosure is directed to providing a battery for a lithium-sulfur battery that suppresses the elution of polysulfide in the initial discharge step of the battery, reduces overvoltage, improves electrolyte resistance characteristics, prevents reactivity decrease and improves output characteristics.

Accordingly, the present disclosure is directed to providing a battery for a lithium-sulfur battery that achieves stable low temperature operation.

Technical Solution

To solve the above-described problem, according to an aspect of the present disclosure, there is provided an electrolyte for a lithium-sulfur battery of the following embodiments.

The electrolyte for the lithium-sulfur battery according to a first embodiment comprises a lithium salt and a nonaqueous solvent, wherein the nonaqueous solvent comprises glycol ether, cyclic ether and acyclic ether represented by the following chemical formula 1, the acyclic ether is included in an amount of 15 vol% or less based on the total volume of the nonaqueous solvent, and a ratio of a total volume of the glycol ether to a total volume of the acyclic ether is 5 or more:

$$[\text{Chemical formula 1}] \qquad R^1\text{-O-}R^2$$

where $R^1$ is an unsubstituted or substituted $C_1$ to $C_3$ alkyl group, and $R^2$ is an unsubstituted or substituted $C_3$ to $C_{20}$ alkyl group.

According to a second embodiment, in the first embodiment, the acyclic ether may be included in an amount of 10 vol% or less based on the total volume of the nonaqueous solvent.

According to a third embodiment, in the first or second embodiment, the ratio of the total volume of the glycol ether to the total volume of the acyclic ether may be 6.5 or more.

According to a fourth embodiment, in any one of the first to third embodiments, the acyclic ether may be included in an amount of 10 vol% or less based on the total volume of the nonaqueous solvent, and the ratio of the total volume of the glycol ether to the total volume of the acyclic ether may be 6.5 or more.

According to a fifth embodiment, in any one of the first to fourth embodiments, an amount of the glycol ether may be 65 vol% or more based on the total volume of the nonaqueous solvent, and a sum of an amount of the cyclic ether and an amount of the acyclic ether may be 35 vol% or less.

According to a sixth embodiment, in any one of the first to fifth embodiments, the acyclic ether may comprise at least one of methyl propyl ether, ethyl propyl ether, dipropyl ether, methyl t-butyl ether, methyl hexyl ether, ethyl t-butyl ether or ethyl hexyl ether.

According to a seventh embodiment, in any one of the first to sixth embodiments, the $R^1$ may be an unsubstituted or substituted $C_1$ to $C_2$ alkyl group, and the $R^2$ may be an unsubstituted or substituted $C_4$ to $C_{10}$ alkyl group.

According to an eighth embodiment, in any one of the first to seventh embodiments, the acyclic ether may comprise at least one of ethyl propyl ether, methyl t-butyl ether or methyl hexyl ether.

According to a ninth embodiment, in any one of the first to eighth embodiments, the glycol ether may comprise at least one of dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether or polyethylene glycol methyl ethyl ether.

According to a tenth embodiment, in any one of the first to ninth embodiments, the cyclic ether may comprise at least one of furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene or 2,5-dimethylthiophene.

According to an eleventh embodiment, in any one of the first to tenth embodiments, the lithium salt may comprise at least one of LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, CF$_3$SO$_3$Li, (CF$_3$SO$_2$)$_2$NLi, (C$_2$F$_5$SO$_2$)$_2$NLi, (SO$_2$F)$_2$NLi, (CF$_3$SO$_2$)$_3$CLi, lithium chloroborane, lower aliphatic lithium carboxylate, lithium tetraphenylborate or lithium imide.

According to another aspect of the present disclosure, there is provided a lithium-sulfur battery of the following embodiments.

The lithium-sulfur battery according to a twelfth embodiment comprises the electrolyte for the lithium-sulfur battery according to any one of the first to eleventh embodiments, a positive electrode comprising a positive electrode active material, and a negative electrode comprising a negative electrode active material.

According to a thirteenth embodiment, in the twelfth embodiment, the positive electrode active material may comprise at least one of sulfur or a sulfur compound.

According to a fourteenth embodiment, in the twelfth or thirteenth embodiment, the positive electrode active material may comprise at least one of an inorganic sulfur ($S_8$), $Li_2Sn$ ($n\geq1$), a disulfide compound, an organic sulfur compound or a carbon-sulfur polymer

$$((C_2S_x)_n, x=\text{an integer of 2.5 to 50}, n\geq2).$$

According to a fifteenth embodiment, in any one of the twelfth to fourteenth embodiments, the negative electrode active material may comprise at least one of a lithium metal or a lithium alloy.

Advantageous Effects

The electrolyte for the lithium-sulfur battery according to an embodiment of the present disclosure suppresses the elution of polysulfide (PS) from the positive electrode.

Accordingly, the battery for the lithium-sulfur battery according to an embodiment of the present disclosure prevents overvoltage at the end of the first discharge (SOC70) during operation, improves reactivity and improves output characteristics.

Additionally, the lithium-sulfur battery using the electrolyte for the lithium-sulfur battery according to an embodiment of the present disclosure achieves stable operation at low temperature, and improves cycle characteristics.

DESCRIPTION OF DRAWINGS

The accompanying drawings illustrate an exemplary embodiment of the present disclosure, and together with the foregoing description, serve to provide further understanding of the technical aspect of the present disclosure, and thus, the present disclosure should not be construed as being limited to the drawings.

FIG. 1a is a graph showing the evaluation results of room temperature operation characteristics of batteries according to experimental example in the present disclosure.

FIG. 1b is a graph showing the evaluation results of low temperature (b) operation characteristics of batteries according to experimental example in the present disclosure.

FIG. 2 is a graph showing the evaluation results of room temperature and low temperature operation characteristics of batteries according to experimental example in the present disclosure.

FIG. 3 is a graph showing the evaluation results of life characteristics of batteries during repeated charge/discharge cycling according to experimental example in the present disclosure.

FIG. 4 is a graph showing the evaluation results of room temperature operation characteristics of batteries according to experimental example in the present disclosure.

FIG. 5 is a graph showing the evaluation results of room temperature and low temperature operation characteristics of batteries according to experimental example in the present disclosure.

FIG. 6a is a graph showing the evaluation results of life characteristics of batteries during repeated charge/discharge cycling according to experimental example in the present disclosure.

FIG. 6b is a graph showing the evaluation results of life characteristics of batteries during repeated charge/discharge cycling according to experimental example in in the present disclosure.

FIG. 7 is a graph showing the evaluation results of room temperature and low temperature operation characteristics of batteries according to experimental example in in the present disclosure.

FIG. 8 is a graph showing the evaluation results of life characteristics of batteries during repeated cycling at low temperature according to experimental example in in the present disclosure.

BEST MODE

Hereinafter, the present disclosure is described in detail. However, the present disclosure is not limited by the following description, and if necessary, each element may be changed variously or combined selectively. Accordingly, it should be understood that the present disclosure encompasses all modifications, equivalents or substitutes included in the spirit and technical scope of the present disclosure.

In the present disclosure, the term "comprising" specifies the presence of stated elements, but does not preclude the presence or addition of one or more other elements unless expressly stated otherwise.

In the present disclosure, the term "polysulfide (PS)" is the concept including "polysulfide ion ($S_x^{2-}$, x = 8, 6, 4, 2))" and "lithium polysulfide ($Li_2S_x$ or $LiS_x^-$, x = 8, 6, 4, 2)".

In the present disclosure, "low temperature" used in relation to low temperature operation of a lithium-sulfur battery may refer to a temperature range of, for example, -15°C to 15°C, to be specific, -10°C to 10°C. The "low temperature operation" is used to describe that an electrolyte for a lithium-sulfur battery according to the present disclosure and a lithium-sulfur battery comprising the same may exhibit outstanding characteristics during the low temperature operation, and it is obvious to those skilled in the art that it is not intended to limit the operating temperature of the electrolyte for the lithium-sulfur battery and the lithium-sulfur battery according to the present disclosure.

The electrolyte for the lithium-sulfur battery according to an aspect of the present disclosure comprises a lithium salt and a nonaqueous solvent, and the nonaqueous solvent comprises glycol ether, cyclic ether and acyclic ether represented by the following chemical formula 1. The acyclic ether is included in an amount of 15 vol% or less based on the total volume of the nonaqueous solvent, and a ratio of the total volume of the glycol ether to the total volume of the acyclic ether is 5 or more.

$$[\text{Chemical formula 1}] \qquad R^1\text{-O-}R^2$$

(where $R^1$ is an unsubstituted or substituted $C_1$ to $C_3$ alkyl group, and $R^2$ is an unsubstituted or substituted $C_3$ to $C_{20}$ alkyl group)

The lithium salt is included as an electrolyte salt in the electrolyte for the lithium-sulfur battery, and the nonaqueous solvent is included as a medium in the electrolyte for the lithium-sulfur battery.

According to the present disclosure, the nonaqueous solvent may comprise a combination of three types of ethers, glycol ether comprising two oxygen atoms, cyclic ether comprising at least one oxygen atom (O) or sulfur atom (S) in the ring structure and acyclic ether represented by the above chemical formula 1, to provide the electrolyte for stable low temperature operation of the lithium-sulfur battery, but the mechanism of the present disclosure is not limited thereto.

When the electrolyte for the lithium-sulfur battery does not comprise the acyclic ether as the nonaqueous solvent and only comprises the glycol ether and the cyclic ether, overvoltage occurs at SOC70 during the low temperature operation of the battery using the same, and thus according to an aspect of the present disclosure, acyclic ether is included as the nonaqueous solvent.

Specifically, when the acyclic ether is included in large amounts based on the total volume of the nonaqueous solvent, the life decreases so fast due to the repeated charge/discharge cycling of the battery during the low temperature operation of the battery using the same, and thus the acyclic ether is included in an amount of 15 vol% or less based on the total volume of the nonaqueous solvent.

In the present disclosure, the amount of each component in the nonaqueous solvent may be measured by the commonly used component analysis method such as NMR, IR, UV-VIS spectrum, MS and gas chromatography, and the measurement method is not limited to a particular method.

In an embodiment of the present disclosure, the acyclic ether may be included in an amount of 10 vol% or less based on the total volume of the nonaqueous solvent. Specifically, the acyclic ether may be included in an amount of 1 vol% or more and 15 vol% or less, or 5 vol% or more and 10 vol% or less based on the total volume of the nonaqueous solvent.

More specifically, when the acyclic ether is included in large amounts based on the volume of the glycol ether in the nonaqueous solvent, overvoltage occurs at SOC70 during the low temperature operation of the battery using the same, and thus the ratio of the total volume of the glycol ether to the total volume of the acyclic ether is 5 or more.

In an embodiment of the present disclosure, the ratio of the total volume of the glycol ether to the total volume of the acyclic ether may be 5.5 or more. Specifically, the ratio of the total volume of the glycol ether to the total volume of the acyclic ether may be 6 or more, 6.5 or more, 7 or more, 7.5 or more or 8 or more. More specifically, the ratio of the total volume of the glycol ether to the total volume of the acyclic ether may be, for example, 5 to 15, 5 to 13, 5 to 10, 6 to 10, 6.5 to 10, 7 to 10 or 8 to 10.

In another embodiment of the present disclosure, the acyclic ether may be included in an amount of 10 vol% or less based on the total volume of the nonaqueous solvent, and the ratio of the total volume of the glycol ether to the total volume of the acyclic ether may be 6.5 or more.

In an embodiment of the present disclosure, based on the total volume of the nonaqueous solvent, the amount of the glycol ether may be 65 vol% or more, and the sum of the amount of the cyclic ether and the amount of the acyclic ether may be 35 vol% or less.

Specifically, based on the total volume of the nonaqueous solvent, the amount of the acyclic ether may be 25 vol% or less.

More specifically, based on the total volume of the nonaqueous solvent, the amount of the glycol ether may be 65 vol% or more, and the sum of the amount of the cyclic ether and the amount of the acyclic ether may be 35 vol% or less.

In another embodiment of the present disclosure, based on the total volume of the nonaqueous solvent, the amount of the glycol ether may be 70 vol% or more, and the sum of the amount of the cyclic ether and the amount of the acyclic ether may be 30 vol% or less.

In another embodiment of the present disclosure, based on the total volume of the nonaqueous solvent, the amount of the glycol ether may be 65 vol% to 84 vol%, and the sum of the amount of the cyclic ether and the amount of the acyclic ether may be 16 vol% to 25 vol%.

In another embodiment of the present disclosure, based on the total volume of the nonaqueous solvent, the amount of glycol ether may be 70 vol% to 80 vol%, and the sum of the amount of the cyclic ether and the amount of the acyclic ether may be 20 vol% to 30 vol%.

In another embodiment of the present disclosure, based on the total volume of the nonaqueous solvent, the amount of the glycol ether may be 75 vol% to 80 vol%, and the sum of the amount of the cyclic ether and the amount of the acyclic ether may be 20 vol% to 25 vol%.

In an embodiment of the present disclosure, when the amount of the solvent is in the above-described range based on the total volume of the nonaqueous solvent, there may be advantageous effects in terms of polysulfide elution suppression and the boiling point of the entire nonaqueous solvent, but the present disclosure is not limited thereto.

In an embodiment of the present disclosure, the $R^1$ may include, specifically, an unsubstituted or substituted methyl group, an unsubstituted or substituted ethyl group, or an unsubstituted or substituted propyl group. In this instance, the substituent included in the substituted methyl group, the substituted ethyl group or the substituted propyl group may include, but is not limited to, for example, a halogen atom, a hydroxy group, a nitro group, a cyano group, an amino group, an amidino group, an acetamino group,hydrazine, hydrazone, a carboxyl group, a sulfonyl group, a sulfamoyl group, a sulfonic acid group, phosphoric acid or a combination thereof.

In another embodiment of the present disclosure, the $R^1$ may be, specifically, an unsubstituted methyl group, an unsubstituted ethyl group or an unsubstituted propyl group. The present disclosure is not limited thereto, but for example, to suppress side reactions with polysulfide or lithium during the operation of the battery, the $R^1$ may be, preferably, an unsubstituted alkyl group.

In an embodiment of the present disclosure, the $R^2$ may be, specifically, a substituted or unsubstituted $C_3$ to $C_{20}$ alkyl group, and in this instance, the substituent included in the substituted $C_3$ to $C_{20}$ alkyl group may include, but is not limited to, for example, a halogen atom, a hydroxy group, a nitro group, a cyano group, an amino group, an amidino group, an acetamino group, hydrazine, hydrazone, a carboxyl group, a sulfonyl group, a sulfamoyl group, a sulfonic acid group, phosphoric acid, a $C_1$ to $C_5$ alkyl group, a $C_1$ to $C_5$ alkoxy group, a $C_2$ to $C_5$ alkenyl group, a $C_2$ to $C_5$ alkynyl group, a $C_4$ to $C_{10}$ cyclo alkyl group, a $C_6$ to $C_{10}$ aryl group, a $C_6$ to $C_{10}$ heteroaryl group, a $C_6$ to $C_{20}$ aryl alkyl group, a $C_6$ to $C_{20}$ heteroaryl alkyl group, or a combination thereof.

In another embodiment of the present disclosure, the $R^2$ may include, but is not limited to, for example, an n-propyl group, an n-butyl group, an n-amyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosanyl group, an iso-propyl group, a sec-butyl group, an iso-butyl group, a tert-butyl group, a 1-methylbutyl group, a 1-ethylpropyl group, a 2-methylbutyl group, an iso-amyl group, a neopentyl group, a 1,2-dimethylpropyl group, a 1,1-dimethylpropyl group, a tert-amyl group, a 1,3-dimethylbutyl group, a 3,3-dimethylbutyl group, a 2-ethylbutyl group, a 2-ethyl-2-methylpropyl group, a straight-chain or branched heptyl group, a 1-methylheptyl group, a 2-ethylhexyl group, a 1,5-dimethylhexyl group, a tert-octyl group, a branched nonyl group, a branched decyl group, a branched undecyl group, a branched dodecyl group, a branched tridecyl group, a branched tetradecyl group, a branched pentadecyl group, a branched hexadecyl group, a branched heptadecyl group, a branched octadecyl group, a straight-chain or branched nonadecyl group, a straight-chain or branched eicosanyl group, a cyclopropyl group, a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexylpropyl group, a cyclododecyl group, a norbornyl group, a bornyl group, a cyclopentylethyl group, a bicyclooctyl group or a combination thereof.

In another embodiment of the present disclosure, the present disclosure is not limited thereto, but for example, to suppress side reactions with polysulfide or lithium during the operation of the battery, $R^2$ may be preferably an unsubstituted alkyl group.

In an embodiment of the present disclosure, the acyclic ether may include, for example, at least one of methyl propyl ether, ethyl propyl ether, dipropyl ether, methyl t-butyl ether, methyl hexyl ether, ethyl t-butyl ether or ethyl hexyl ether.

In another embodiment of the present disclosure, the $R^1$ may be, specifically, an unsubstituted or substituted $C_1$ to $C_2$ alkyl group, and the $R^2$ may be, specifically, an unsubstituted or substituted $C_4$ to $C_{10}$ alkyl group. More specifically, the $R^1$ may be an unsubstituted $C_1$ to $C_2$ alkyl group, and the $R^2$ may be an unsubstituted $C_4$ to $C_{10}$ alkyl group.

In an embodiment of the present disclosure, the acyclic ether may comprise at least one of ethyl propyl ether, methyl t-butyl ether or methyl hexyl ether.

Additionally, in another embodiment of the present disclosure, the acyclic ether may comprise methyl hexyl ether alone.

In an embodiment of the present disclosure, the above-described types as the acyclic ether act as a non-solvent to polysulfide released from the positive electrode, thereby suppressing the elution of polysulfide from the positive electrode. Additionally, the acyclic ether may improve the low temperature operation of the lithium-sulfur battery in terms of the boiling point characteristics, but the mechanism of the present disclosure is not limited thereto.

In an embodiment of the present disclosure, preferably, the boiling point (bp) of the acyclic ether may be higher than the operating temperature of the battery using the electrolyte for the lithium-sulfur battery, and for example, the boiling point of the acyclic ether may be 55°C or more. Specifically, the boiling point of the acyclic ether may be 55°C or more and 130°C or less, 55°C or more and 110°C or less, 55°C or more and 100°C or less, 55°C or more and 85°C or less, 55°C or more and 80°C or less, 60°C or more and 75°C or less or 60°C or more to 70°C or less, but is not limited thereto. The boiling point may be a measured value at 25°C, 1 atmospheric pressure.

The glycol ether may include, without limitation, any acyclic ether comprising two oxygen atoms that can used as the electrolyte of the lithium-sulfur battery.

In an embodiment of the present disclosure, the glycol ether may be represented by the following chemical formula 2:

$$[\text{Chemical formula 2}] \qquad R^3\text{-O-}(CH_2CH_2O)_y\text{-}R^4$$

(where $R^3$ and $R^4$ are identical or different, and each of them is independently a $C_1$ to $C_6$ unsubstituted or substituted alkyl group, or a $C_6$ to $C_{12}$ unsubstituted or substituted aryl group, or a $C_7$ to $C_{13}$ unsubstituted or substituted aryl alkyl group, and y is an integer of 0 to 4.)

The glycol ether may comprise, for example, at least one of dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether or polyethylene glycol methyl ethyl ether, but is not limited thereto.

The cyclic ether may include, without limitation, any ether that comprises at least one oxygen atom (O) or sulfur atom (S) in the ring structure, has at least one -C-O-C-structure or -C-S-C- structure in the ring structure, and can be used as the electrolyte of the lithium-sulfur battery. The cyclic ether may comprise, for example, at least one of furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene or 2,5-dimethylthiophene, but is not limited thereto.

The lithium salt may include, without limitation, any lithium salt that may be commonly used in the electrolyte of the lithium-sulfur battery. The lithium salt may comprise, for example, at least one of LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, CF$_3$SO$_3$Li, (CF$_3$SO$_2$)$_2$NLi, (C$_2$F$_5$SO$_2$)$_2$NLi, (SO$_2$F)$_2$NLi, (CF$_3$SO$_2$)$_3$CLi, lithium chloroborane, lower aliphatic lithium carboxylate, lithium tetraphenylborate or lithium imide, but is not limited thereto.

In an embodiment of the present disclosure, the lithium salt may not comprise lithium nitrates. The lithium nitrates may be included as an example of a nitric acid or nitrous acid-based compound as described below.

In an embodiment of the present disclosure, the lithium salt may comprise lithium bis(fluorosulfonyl)imide(LiFSI).

In an embodiment of the present disclosure, the concentration of the lithium salt may be appropriately determined, taking into account the ionic conductivity and solubility, and may be, for example, 0.1 to 4.0 M, 0.5 to 2.0 M, 0.5 to 1.0M or 0.75 M. When the concentration of the lithium salt is in the above-described range, there may be advantageous effects in terms of the ionic conductivity and the viscosity of the electrolyte, but is not limited thereto.

In an embodiment of the present disclosure, the nonaqueous solvent may comprise dimethoxy ethane as glycol ether, 2-methyl furan as cyclic ether and ethyl propyl ether as acyclic ether. Specifically, the nonaqueous solvent may comprise dimethoxy ethane, 2-methyl furan and ethyl propyl ether at a volume ratio of 65 to 85:1 to 20:1 to 15.

In another embodiment of the present disclosure, the nonaqueous solvent may comprise dimethoxy ethane, 2-methyl-tetrahydrofurane and methyl t-butyl ether. Specifically, the nonaqueous solvent may comprise dimethoxy ethane, 2-methyl furan and methyl t-butyl ether at a volume ratio of 65 to 85:1 to 20:1 to 15.

In another embodiment of the present disclosure, the nonaqueous solvent may comprise dimethoxy ethane, 2-methyl furan and hexyl methyl ether. Specifically, the nonaqueous solvent may comprise dimethoxy ethane, 2-methyl furan and hexyl methyl ether at a volume ratio of 65 to 85:1 to 20:1 to 15.

In an embodiment of the present disclosure, in addition to the above-described composition, the electrolyte for the lithium-sulfur battery may further comprise the nitric acid or nitrous acid-based compound. The nitric acid or nitrous acid-based compound may, for example, form a stable film on the negative electrode of lithium metal and improve charge/discharge efficiency, but the mechanism of the present disclosure is not limited thereto.

In the present disclosure, the nitric acid or nitrous acid-based compound is not limited to a particular type, but may include, for example, at least one of an inorganic nitric acid or nitrous acid compound such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_2$), cesium nitrite ($CsNO_2$), ammonium nitrite ($NH_4NO_2$); an organic nitric acid or nitrous acid compound such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; an organic nitro compound such as nitromethane, nitropropane, nitrobutane, nitrobenzene, dinitrobenzene, nitro pyridine, dinitro pyridine, nitrotoluene, dinitrotoluene.

In an embodiment of the present disclosure, the electrolyte for the lithium-sulfur battery may further comprise lithium nitrate ($LiNO_3$).

In another embodiment of the present disclosure, in addition to the above-described composition, the electrolyte for the lithium-sulfur battery may further comprise an additive to improve charge/discharge characteristics, flame retardancy, etc. The additive is not limited to a particular type, but may include, for example, pyridine, triethylphosphite, triethanolamine, ethylene diamine, n-glyme, hexaphosphoric tri amide, nitrobenzene derivatives, sulfur, a quinone imine dye, N-substituted oxazolidinone, N,N-substituted imidazolidine, an ammonium salt, pyrrole, 2-methoxy ethanol, aluminum trichloride, fluoro ethylene carbonate (FEC), propene sultone (PRS) and vinylene carbonate (VC).

The electrolyte for the lithium-sulfur battery according to an aspect of the present disclosure may be prepared by the method commonly used in the corresponding field, and the present disclosure is not limited to a particular method.

The lithium-sulfur battery according to another aspect of the present disclosure comprises the above-described electrolyte for the lithium-sulfur battery, and a positive electrode comprising a positive electrode active material and a negative electrode comprising a negative electrode active material.

The positive electrode, the positive electrode active material, the negative electrode and the negative electrode active material are not limited to particular types, and may include any type of them that may be used in the lithium-sulfur battery without departing from the scope of the present disclosure.

For example, the positive electrode may comprise a positive electrode current collector and a positive electrode active material layer coated on one or two surfaces of the positive electrode current collector, and the negative electrode may comprise a negative electrode current collector and a negative electrode active material layer coated on one or two surfaces of the negative electrode current collector.

In this instance, the positive electrode current collector is not limited to a particular type and may include any type of material that supports the positive electrode active material and has high conductivity while not causing any chemical change to the corresponding battery, and the negative electrode current collector is not limited to a particular type and may include any type of material that supports the negative electrode active material and has high conductivity while not causing any chemical change to the corresponding battery.

In an embodiment of the present disclosure, the positive electrode active material may comprise, for example, at least one of sulfur or a sulfur compound. Specifically, the positive electrode active material may comprise at least one of an inorganic sulfur ($S_8$), $Li_2Sn$ ($n \geq 1$), a disulfide compound, an organic sulfur compound or a carbon-sulfur polymer

$$((C_2S_x)_n, \ x=2.5 \text{ to } 50, \ n \geq 2).$$

In an embodiment of the present disclosure, the negative electrode active material is not limited to a particular type and may include a material capable of reversible intercalation or deintercalation of lithium ($Li^+$), or a material that reversibly forms a lithium containing compound by reaction with lithium ions. For example, the negative electrode active material may comprise at least one of a lithium metal or a lithium alloy. The lithium alloy may include, for example, an alloy of lithium (Li) and at least one of sodium (Na), potassium (K), rubidium (Rb), cesium (Cs), francium (Fr), beryllium (Be), magnesium (Mg), calcium (Ca), strontium (Sr), barium (Ba), radium (Ra), aluminum(Al) or tin (Sn).

Additionally, in addition to the active material, each of the positive electrode active material layer and the negative electrode active material layer may further comprise a conductive material, a binder and an additive, and they may comprise the commonly used types, so its description is omitted.

Hereinafter, the present disclosure will be described in more detail through example, but the following example is provided to describe the present disclosure, and the scope of the present disclosure is not limited thereto.

First, a pouch cell type lithium-sulfur battery was manufactured by the following method.

**Example 1.**

Preparation of electrolyte for lithium-sulfur battery

0.75 M lithium bis(fluorosulfonyl)imide (LiFSI) and 5.0 weight% of lithium nitrate ($LiNO_3$) were added to dimethoxy ethane (DME) and dissolved by stirring for 12 hours, followed by stirring with an addition of 2-methyl furan and ethyl propyl ether to prepare an electrolyte.

In this instance, the volume ratio of dimethoxy ethane:2-methyl furan:ethyl propyl ether used was 70:20:10.

Manufacture of positive electrode

A sulfur-carbon composite (S:C=75:25(weight ratio)) as a positive electrode active material and lithium polyacrylate (LiPAA) as a binder were mixed at a weight ratio of 95:5 using distilled water as a solvent to prepare a positive electrode slurry.

The prepared positive electrode slurry composition was coated on two surfaces of a 12 $\mu$m thick aluminum current collector, dried at 80°C and rolled using a roll press to manufacture a positive electrode. In this instance, the loading amount of the positive electrode active material was 4.1 mAh/cm$^2$.

Manufacture of negative electrode

A stack of two sheets of 30 $\mu$m thick lithium metal was prepared as a negative electrode (total 60 $\mu$m).

Manufacture of lithium-sulfur battery

The positive electrode and the negative electrode manufactured as described above were placed with a polyethylene separator having the thickness of 16 $\mu$m and the porosity 68% interposed therebetween and stacked to assemble a pouch cell, and 1.5 g of the prepared electrolyte was injected such that El/S (Electrolyte/S loading amount) is 2.9 ml/g, followed by sealing, to manufacture a pouch-type lithium-sulfur battery. The manufactured battery has capacity of 0.6Ah, energy of 1.29 Wh, and energy density of 401 Wh/kg.

**Example 2**

A lithium-sulfur battery was manufactured by the same method as example 1 except that the volume ratio of dimethoxy ethane:2-methyl furan:ethyl propyl ether used to prepare the electrolyte was 80:10:10.

**Example 3**

A lithium-sulfur battery was manufactured by the same method as example 1 except that the volume ratio of dimethoxy ethane:2-methyl furan:ethyl propyl ether used to prepare the electrolyte was 60:30: 10.

**Example 4**

A lithium-sulfur battery was manufactured by the same method as example 1 except that methyl t-butyl ether was used instead of ethyl propyl ether when preparing the electrolyte such that the volume ratio of dimethoxy ethane:2-methyl furan:methyl t-butyl ether was 70:20: 10 in the composition of the nonaqueous solvent of the electrolyte.

**Example 5**

A lithium-sulfur battery was manufactured by the same method as example 1 except that methyl hexyl ether was used instead of ethyl propyl ether when preparing the electrolyte such that the volume ratio of dimethoxy ethane:2-methyl furan:methyl hexyl ether was 70:20:10 in the composition of the nonaqueous solvent of the electrolyte.

**Example 6**

A lithium-sulfur battery was manufactured by the same method as example 1 except that dipropyl ether was used instead of ethyl propyl ether when preparing the electrolyte such that the volume ratio of dimethoxy ethane:2-methyl furan:dipropyl ether was 70:20:10 in the composition of the nonaqueous solvent of the electrolyte.

**Example 7**

A lithium-sulfur battery was manufactured by the same method as example 1 except that ethyl t-butyl ether was used instead of ethyl propyl ether when preparing the electrolyte such that the volume ratio of dimethoxy ethane:2-methyl furan:ethyl t-butyl ether was 70:20:10 in the composition of the nonaqueous solvent of the electrolyte.

**Comparative example 1**

A lithium-sulfur battery was manufactured by the same method as example 1 except that ethyl propyl ether was not used when preparing the electrolyte.

In this instance, the volume ratio of dimethoxy ethane:2-methyl furan used was 80:20.

**Comparative example 2**

A lithium-sulfur battery was manufactured by the same method as comparative example 1 except that the volume ratio of dimethoxy ethane:2-methyl furan was 70:30 when preparing the electrolyte.

**Comparative example 3**

A lithium-sulfur battery was manufactured by the same method as example 1 except that 2-methyl furan was not used when preparing the electrolyte, and the volume ratio of dimethoxy ethane:ethyl propyl ether was 80:20.

**Comparative example 4**

A lithium-sulfur battery was manufactured by the same method as example 1 except that the volume ratio of dimethoxy ethane:2-methyl furan:ethyl propyl ether used to prepare the electrolyte was 70:10:20.

**Comparative example 5**

A lithium-sulfur battery was manufactured by the same method as comparative example 4 except that methyl t-butyl ether was used instead of ethyl propyl ether when preparing the electrolyte such that the volume ratio of dimethoxy ethane:2-methyl furan:methyl t-butyl ether was 70:10:20 in the composition of the nonaqueous solvent of the electrolyte.

**Comparative example 6**

A lithium-sulfur battery was manufactured by the same method as comparative example 4 except that methyl hexyl ether was used instead of ethyl propyl ether when preparing the electrolyte such that the volume ratio of dimethoxy ethane:2-methyl furan:methyl hexyl ether was 70:10:20 in the composition of the nonaqueous solvent of the electrolyte.

**Comparative example** 7

A lithium-sulfur battery was manufactured by the same method as example 1 except that dibutyl ether was used instead of ethyl propyl ether when preparing the electrolyte such that the volume ratio of dimethoxy ethane:2-methyl furan:dibutyl ether was 70:20:10 in the composition of the nonaqueous solvent of the electrolyte.

The following Table 1 summarizes the electrolyte composition used in the batteries of examples 1 to 7 and comparative examples 1 to 7.

[Table 1]

| Classification | Solvent volume ratio (v/v) | | | Lithium salt (M) | Additiv e (wt%) |
|---|---|---|---|---|---|
| | Glycol ether (diethoxyethane) | Cyclic ether (2-methyl furan) | Acyclic ether | LiFSI | LiNO$_3$ |
| Example 1 | 70 | 20 | Ethyl propyl ether | 0.75 | 5 |
| | | | 10 | | |
| Example 2 | 80 | 10 | Ethyl propyl ether | 0.75 | 5 |
| | | | 10 | | |

(continued)

| Classification | Solvent volume ratio (v/v) | | | Lithium salt (M) | Additiv e (wt%) |
|---|---|---|---|---|---|
| | Glycol ether (diethoxyethane) | Cyclic ether (2-methyl furan) | Acyclic ether | LiFSI | LiNO$_3$ |
| Example 3 | 60 | 30 | Ethyl propyl ether | 0.75 | 5 |
| | | | 10 | | |
| Example 4 | 70 | 20 | Methyl t-butyl ether | 0.75 | 5 |
| | | | 10 | | |
| Example 5 | 70 | 20 | Methyl hexyl ether | 0.75 | 5 |
| | | | 10 | | |
| Example 6 | 70 | 20 | Dipropyl ether | 0.75 | 5 |
| | | | 10 | | |
| Example 7 | 70 | 20 | Ethyl t-butyl ether | 0.75 | 5 |
| | | | 10 | | |
| Comparative example 1 | 80 | 20 | - | 0.75 | 5 |
| Comparative example 2 | 70 | 30 | - | 0.75 | 5 |
| Comparative example 3 | 80 | - | Ethyl propyl ether | 0.75 | 5 |
| | | | 20 | | |
| Comparative example 4 | 70 | 10 | Ethyl propyl ether | 0.75 | 5 |
| | | | 20 | | |
| Comparative example 5 | 70 | 10 | Methyl t-butyl ether | 0.75 | 5 |
| | | | 20 | | |
| Comparative example 6 | 70 | 10 | Methyl hexyl ether | 0.75 | 5 |
| | | | 20 | | |
| Comparative example 7 | 70 | 20 | Dibutyl ether | 0.75 | 5 |
| | | | 10 | | |

**Experimental example 1. Evaluation of room temperature and low temperature operation characteristics according to the composition of the nonaqueous solvent**

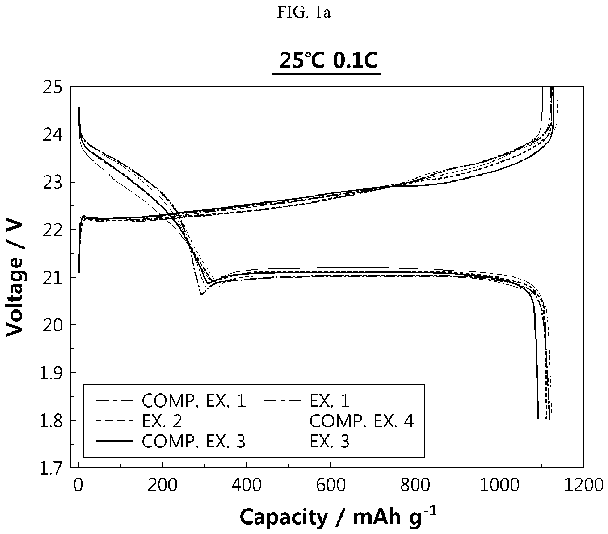

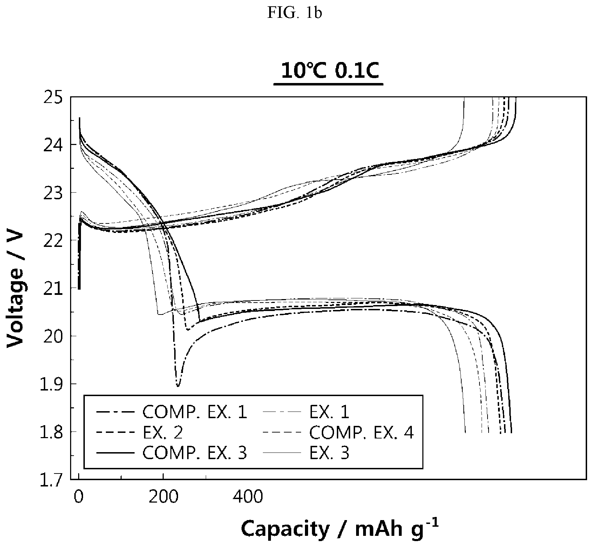

FIGS. 1a and 1b show the evaluation results of the operation of the batteries of examples 1 to 3 and comparative examples 1, 3 and 4 in one cycle at 0.1C charge/0.1C discharge (each 2.5V upper limit/1.8V lower limit) at each temperature of 25°C and 10°C.

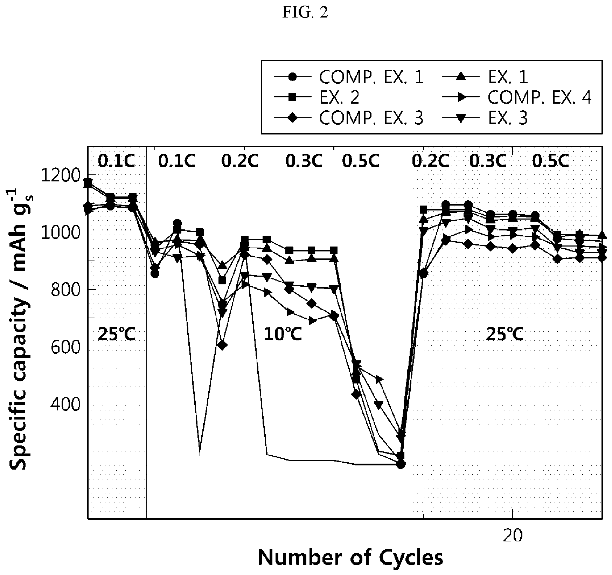

Additionally, FIG. 2 shows the evaluation results of discharge capacity of the battery as a function of the number of cycles during the operation of the batteries of examples 1 to 3 and comparative examples 1, 3 and 4 in one cycle at 0.1C, 25°C, three cycles at each of 0.1C, 0.2C, 0.3C and 0.5C, 10°C, and then three cycles at each of 0.2C, 0.3C and 0.5C, 25°C again.

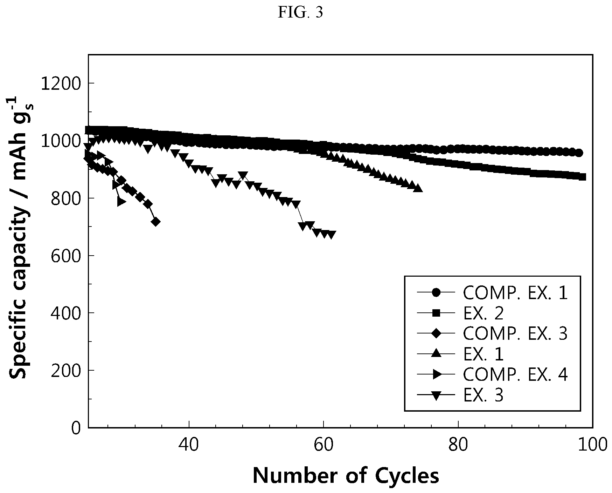

Additionally, FIG. 3 shows the evaluation results of charge capacity of the battery during repeated 0.3C charge/0.3C discharge (each 2.5V upper limit/1.8V lower limit) cycling at the temperature of 25°C using the battery having undergone the high rate characteristics evaluation shown in FIG. 2.

As can be seen from FIG. 1, it was confirmed that when acyclic ether was used as the nonaqueous solvent in the electrolyte, the dip region or overvoltage disappeared at SOC70 during the low temperature operation.

However, referring to FIGS. 2 and 3, comparative example 3 in which acyclic ether was used but cyclic ether was not used, and comparative example 4 in which acyclic ether was used but included in excessive amounts such that glycol ether is present in an amount of less than 5 relative to the volume of the acyclic ether (glycol ether:acyclic ether=3.5: 1) showed poor life characteristics due to the repeated charge/discharge cycling of the battery.

**Experimental example 2. Evaluation of room temperature and low temperature operation characteristics according to the composition ratio of the nonaqueous solvent and the type of acyclic ether**

Referring to the results of the experimental example 1, the comparative evaluation of room temperature and low temperature operation characteristics was performed with the volume ratio of the glycol ether in the nonaqueous solvent being fixed to 70 vol% at varying amounts of the acyclic ether or varying types of acyclic ether.

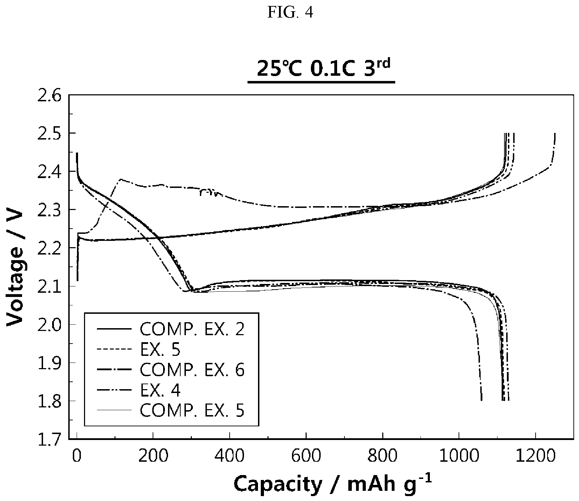

Specifically, FIG. 4 shows the evaluation results of the charge/discharge characteristics during the operation of the manufactured batteries of examples 4 and 5 and comparative examples 2, 5 and 6 in two cycles and then three cycles at 0.1C charge/0.1C discharge (each 2.5V upper limit/1.8V lower limit), 25°C.

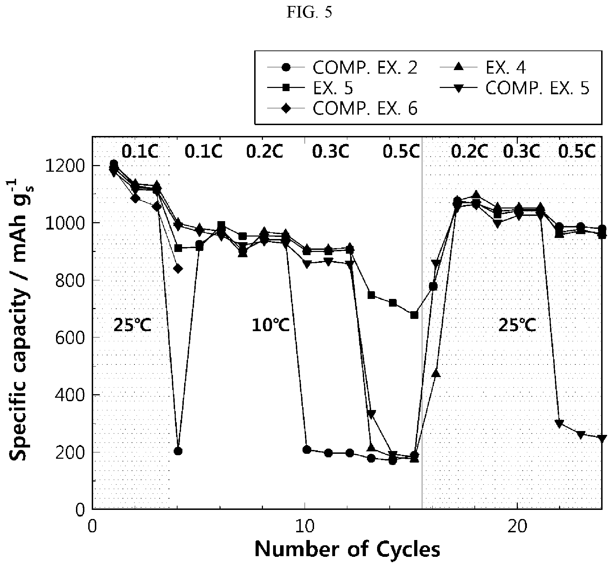

Additionally, FIG. 5 shows the evaluation results of the discharge capacity of the battery as a function of cycle number during the operation of the batteries of examples 4 and 5 and Comparative examples 2, 5 and 6 in one cycle at 0.1C, 25°C, then three cycles at each of 0.1C, 0.2C, 0.3C and 0.5C, 10°C, and three cycles at each of 0.2C, 0.3C and 0.5C, 25°C again.

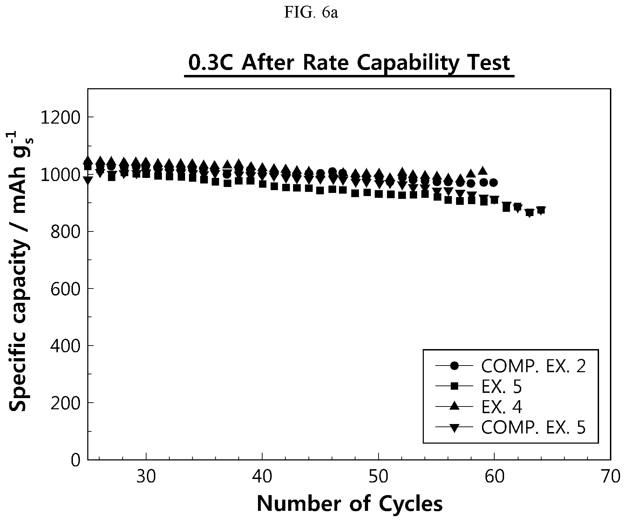

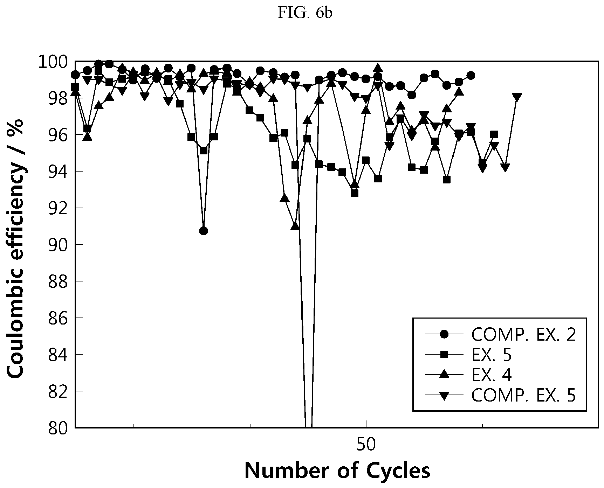

Additionally, each of FIGS. 6a and 6b shows the evaluation results of the charge capacity of the battery during repeated 0.3C charge/0.3C discharge (each 2.5V upper limit/1.8V lower limit) cycling at 25°C using the battery having undergone the high rate characteristics evaluation shown in FIG. 5. According to the results of FIG. 5, comparative example 6 does not exhibit battery performance after 5 cycles, and FIGS. 6a and 6b showing the battery capacity evaluation results after 25 cycles do not show the results of comparative example 6.

Referring to FIGS. 4 to 6a and 6b, it was confirmed that comparative example 6 in which a volume ratio of glycol ether to methyl hexyl ether as acyclic ether was 3.5:1 (glycol ether:methyl hexyl ether) was overcharged due to 1st plateau overvoltage. Additionally, except comparative example 6, the results of FIGS. 4 to 6 revealed that acyclic ether may prevent overvoltage of the battery, but when acyclic ether is included in excessive amounts such that the ratio of the volume of glycol ether to the volume of acyclic ether is less than 5, the battery life at room temperature degrades.

**Experimental example 3. Evaluation of room temperature and low temperature operation characteristics according to the type of acyclic ether**

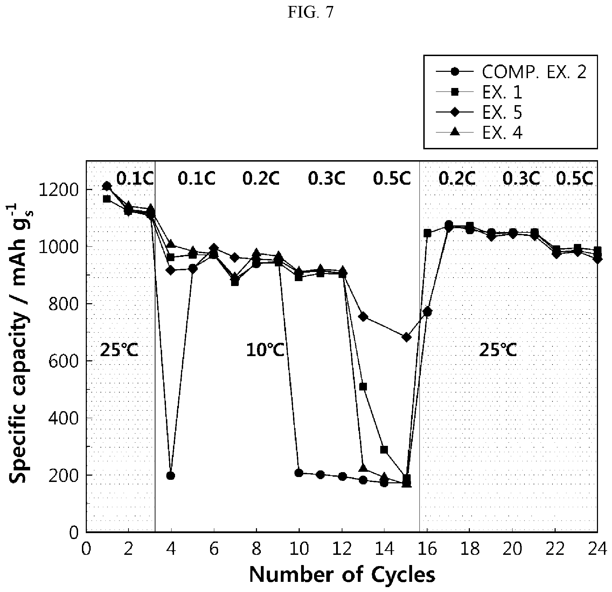

FIG. 7 shows the evaluation results of the discharge capacity of the battery as a function of cycle number during the operation in one cycle at 0.1C, 25°C, then in three cycles at each of 0.1C, 0.2C, 0.3C and 0.5C, 10°C, and subsequently, in three cycles at each of 0.2C, 0.3C and 0.5C, 25°C again, in example 1 (ethyl propyl ether), example 4 (methyl t-butyl ether) and example 5 (methyl hexyl ether) in which the volume ratio of glycol ether : cyclic ether : acyclic ether in the prepared electrolyte is equally 7:2:1 but the type of acyclic ether is different, and comparative example 2 in which the total volume of glycol ether is the same.

Referring to FIG. 7, it was confirmed that the battery comprising glycol ether : cyclic ether : acyclic ether at 7:2:1 volume ratio as the nonaqueous solvent in the electrolyte is good at low temperature operation characteristics, and in particular, the low temperature operation characteristics of methyl hexyl ether are the best in an order of example 5>example 1> example 4.

**Experimental example 4. Evaluation of room temperature and low temperature operation characteristics according to the type of acyclic ether**

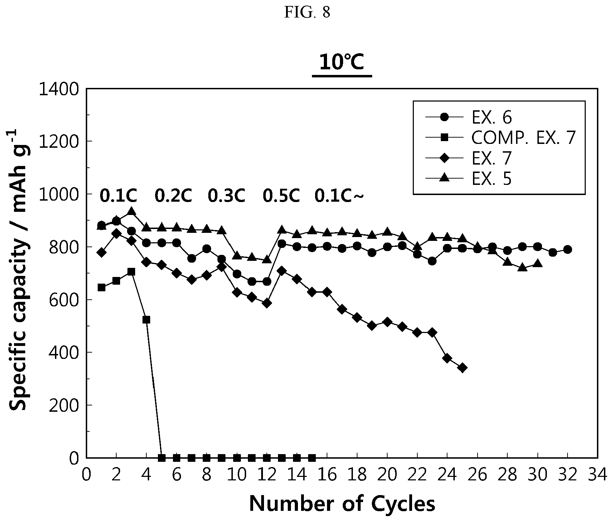

FIG. 8 shows the evaluation results of the discharge capacity of the battery as a function of cycle number according to the discharge protocol during the operation in three cycles at 0.1C, 25°C, then in three cycles at each discharge rate under the condition of 0.1C-0.2C-0.3C-0.5C at 10°C, and subsequently 0.1, 10°C again, in example 5 (methyl hexyl ether), example 6(dipropyl ether), example 7 (ethyl t-butyl ether) and comparative example 7 (dibutyl ether) in which the volume ratio of glycol ether:cyclicether:acyclic ether in the prepared electrolyte is equally 7:2:1 but the type of acyclic ether is different.

Referring to FIG. 8, it was confirmed that dipropyl ether, ethyl t-butyl ether and methyl hexyl ether as acyclic ether in the nonaqueous solvent of the electrolyte showed the outstanding low temperature operation characteristics, while dibutyl ether was not suitable for low temperature operation.

**Claims**

1.  An electrolyte for a lithium-sulfur battery, comprising:

    a lithium salt and a nonaqueous solvent,
    wherein the nonaqueous solvent comprises glycol ether, cyclic ether and acyclic ether represented by the following chemical formula 1,
    wherein the acyclic ether is included in an amount of 15 vol% or less based on the total volume of the nonaqueous solvent, and
    wherein a ratio of a total volume of the glycol ether to a total volume of the acyclic ether is 5 or more:

    [Chemical formula 1]     $R^1$-O-$R^2$

    where $R^1$ is an unsubstituted or substituted $C_1$ to $C_3$ alkyl group, and $R^2$ is an unsubstituted or substituted $C_3$ to $C_{20}$ alkyl group.

2.  The electrolyte for the lithium-sulfur battery according to claim 1, wherein the acyclic ether is included in an amount of 10 vol% or less based on the total volume of the nonaqueous solvent.

3.  The electrolyte for the lithium-sulfur battery according to claim 1, wherein the ratio of the total volume of the glycol ether to the total volume of the acyclic ether is 6.5 or more.

4.  The electrolyte for the lithium-sulfur battery according to claim 1, wherein the acyclic ether is included in an amount of 10 vol% or less based on the total volume of the nonaqueous solvent, and the ratio of the total volume of the glycol ether to the total volume of the acyclic ether is 6.5 or more.

5.  The electrolyte for the lithium-sulfur battery according to claim 1, wherein an amount of the glycol ether is 65 vol% or more based on the total volume of the nonaqueous solvent, and a sum of an amount of the cyclic ether and an amount of the acyclic ether is 35 vol% or less.

6.  The electrolyte for the lithium-sulfur battery according to claim 1, wherein the acyclic ether comprises at least one of methyl propyl ether, ethyl propyl ether, dipropyl ether, methyl t-butyl ether, methyl hexyl ether, ethyl t-butyl ether or ethyl hexyl ether.

7.  The electrolyte for the lithium-sulfur battery according to claim 1, wherein the $R^1$ is an unsubstituted or substituted $C_1$ to $C_2$ alkyl group, and
    wherein the $R^2$ is an unsubstituted or substituted $C_4$ to $C_{10}$ alkyl group.

8.  The electrolyte for the lithium-sulfur battery according to claim 1, wherein the acyclic ether comprises at least one of ethyl propyl ether, methyl t-butyl ether or methyl hexyl ether.

9.  The electrolyte for the lithium-sulfur battery according to claim 1, wherein the glycol ether comprises at least one of dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether or polyethylene glycol methyl ethyl ether.

10. The electrolyte for the lithium-sulfur battery according to claim 1, wherein the cyclic ether comprises at least one of furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene or 2,5-dimethylthiophene.

11. The electrolyte for the lithium-sulfur battery according to claim 1, wherein the lithium salt comprises at least one of LiCl, LiBr, LiI, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$, $(CF_3SO_2)_3CLi$, lithium chloroborane, lower aliphatic lithium carboxylate, lithium tetraphenylborate or lithium imide.

12. A lithium-sulfur battery, comprising:

the electrolyte for the lithium-sulfur battery according to any one of claims 1 to 11;
a positive electrode comprising a positive electrode active material; and
a negative electrode comprising a negative electrode active material.

13. The lithium-sulfur battery according to claim 12, wherein the positive electrode active material comprises at least one of sulfur or a sulfur compound.

14. The lithium-sulfur battery according to claim 12, wherein the positive electrode active material comprises at least one of an inorganic sulfur ($S_8$), $Li_2Sn$ (where $n{\geq}1$), a disulfide compound, an organic sulfur compound or a carbon-sulfur polymer ($(C_2S_x)_n$, where x=an integer of 2.5 to 50, $n{\geq}2$).

15. The lithium-sulfur battery according to claim 12, wherein the negative electrode active material comprises at least one of a lithium metal or a lithium alloy.

FIG. 1a

**25°C 0.1C**

FIG. 1b

**10°C 0.1C**

FIG. 2

FIG. 3

FIG. 4

25°C 0.1C 3rd

FIG. 5

FIG. 6a

**0.3C After Rate Capability Test**

FIG. 6b

FIG. 7

FIG. 8

## INTERNATIONAL SEARCH REPORT

| | International application No. |
|---|---|
| | **PCT/KR2023/001147** |

**A. CLASSIFICATION OF SUBJECT MATTER**

**H01M 10/0569**(2010.01)i; **H01M 10/052**(2010.01)i; **H01M 4/38**(2006.01)i

According to International Patent Classification (IPC) or to both national classification and IPC

**B. FIELDS SEARCHED**

Minimum documentation searched (classification system followed by classification symbols)

H01M 10/0569(2010.01); H01M 10/05(2010.01); H01M 10/052(2010.01); H01M 10/0567(2010.01); H01M 10/058(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬-황 전지(lithium-sulfur battery), 전해질(electrolyte), 용매(solvent), 글리콜 에테르(glycol ether), 환형 에테르(cyclic ether), 비환형 에테르(linear ether), 부피(volume)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0001997 A (LG CHEM, LTD.) 05 January 2018 (2018-01-05) <br> See claims 1, 5, 6 and 9; paragraphs [0062], [0066]-[0074], [0090], [0097], [0109]-[0116], [0119] and [0120]; and example 2. | 1-15 |
| A | KR 10-2022-0108959 A (LG ENERGY SOLUTION, LTD.) 04 August 2022 (2022-08-04) <br> See entire document. | 1-15 |
| A | KR 10-1167334 B1 (SION POWER CORPORATION) 19 July 2012 (2012-07-19) <br> See entire document. | 1-15 |
| A | KR 10-2005-0038895 A (SAMSUNG SDI CO., LTD.) 29 April 2005 (2005-04-29) <br> See entire document. | 1-15 |
| A | KR 10-2008-0044101 A (INDUSTRY-ACADEMIC COOPERATION FOUNDATION GYEONGSANG NATIONAL UNIVERSITY et al.) 20 May 2008 (2008-05-20) <br> See entire document. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 May 2023** | **16 May 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/001147**

| Patent document cited in search report | | | Publication date (day/month/year) | Patent family member(s) | | | Publication date (day/month/year) |
|---|---|---|---|---|---|---|---|
| KR | 10-2018-0001997 | A | 05 January 2018 | CN | 109075394 | A | 21 December 2018 |
| | | | | CN | 109075394 | B | 27 August 2021 |
| | | | | EP | 3429020 | A1 | 16 January 2019 |
| | | | | EP | 3429020 | A4 | 06 March 2019 |
| | | | | EP | 3429020 | B1 | 18 August 2021 |
| | | | | JP | 2019-506725 | A | 07 March 2019 |
| | | | | JP | 6699876 | B2 | 27 May 2020 |
| | | | | US | 10930975 | B2 | 23 February 2021 |
| | | | | US | 2019-0097270 | A1 | 28 March 2019 |
| | | | | WO | 2018-004103 | A1 | 04 January 2018 |
| KR | 10-2022-0108959 | A | 04 August 2022 | EP | 4164018 | A1 | 12 April 2023 |
| | | | | WO | 2022-164107 | A1 | 04 August 2022 |
| KR | 10-1167334 | B1 | 19 July 2012 | AT | 549760 | T | 15 March 2012 |
| | | | | CA | 2552563 | A1 | 28 July 2005 |
| | | | | CN | 101939862 | A | 05 January 2011 |
| | | | | CN | 101939862 | B | 12 March 2014 |
| | | | | CN | 102144324 | A | 03 August 2011 |
| | | | | CN | 102144324 | B | 30 September 2015 |
| | | | | CN | 102576855 | A | 11 July 2012 |
| | | | | CN | 102576855 | B | 25 November 2015 |
| | | | | CN | 102598364 | A | 18 July 2012 |
| | | | | CN | 102598364 | B | 27 January 2016 |
| | | | | CN | 103380524 | A | 30 October 2013 |
| | | | | CN | 103718368 | A | 09 April 2014 |
| | | | | CN | 103718368 | B | 23 October 2018 |
| | | | | CN | 105206793 | A | 30 December 2015 |
| | | | | CN | 105206793 | B | 22 December 2017 |
| | | | | CN | 1930710 | A | 14 March 2007 |
| | | | | CN | 1930710 | C | 20 January 2010 |
| | | | | EP | 1726052 | A2 | 29 November 2006 |
| | | | | EP | 1726052 | B1 | 14 March 2012 |
| | | | | EP | 1726052 | B8 | 18 April 2012 |
| | | | | EP | 2240973 | A2 | 20 October 2010 |
| | | | | EP | 2240973 | B1 | 28 March 2018 |
| | | | | EP | 2324526 | A1 | 25 May 2011 |
| | | | | EP | 2365566 | A1 | 14 September 2011 |
| | | | | EP | 2365566 | B1 | 14 October 2020 |
| | | | | EP | 2409349 | A2 | 25 January 2012 |
| | | | | EP | 2471128 | A2 | 04 July 2012 |
| | | | | EP | 2471128 | B1 | 25 March 2020 |
| | | | | EP | 2471130 | A2 | 04 July 2012 |
| | | | | EP | 2471130 | B1 | 04 December 2019 |
| | | | | EP | 2669975 | A1 | 04 December 2013 |
| | | | | EP | 2678893 | A2 | 01 January 2014 |
| | | | | EP | 2715854 | A1 | 09 April 2014 |
| | | | | EP | 2715854 | B1 | 09 December 2020 |
| | | | | EP | 3671908 | A1 | 24 June 2020 |
| | | | | EP | 3694036 | A1 | 12 August 2020 |
| | | | | EP | 3826094 | A1 | 26 May 2021 |
| | | | | IN | 2063DEN2012 | A | 21 August 2015 |

Form PCT/ISA/210 (patent family annex) (July 2022)

**INTERNATIONAL SEARCH REPORT**
Information on patent family members

| International application No. |
| --- |
| **PCT/KR2023/001147** |

| Patent document cited in search report | Publication date (day/month/year) | Patent family member(s) | | | Publication date (day/month/year) |
| --- | --- | --- | --- | --- | --- |
| | | JP | 2007-518229 | A | 05 July 2007 |
| | | JP | 2011-509509 | A | 24 March 2011 |
| | | JP | 2011-530784 | A | 22 December 2011 |
| | | JP | 2013-502700 | A | 24 January 2013 |
| | | JP | 2013-503439 | A | 31 January 2013 |
| | | JP | 2014-239047 | A | 18 December 2014 |
| | | JP | 2014-511548 | A | 15 May 2014 |
| | | JP | 2014-518001 | A | 24 July 2014 |
| | | JP | 2017-084812 | A | 18 May 2017 |
| | | JP | 5094123 | B2 | 12 December 2012 |
| | | JP | 5619622 | B2 | 05 November 2014 |
| | | JP | 5731382 | B2 | 10 June 2015 |
| | | JP | 6072779 | B2 | 01 February 2017 |
| | | KR | 10-1601992 | B1 | 09 March 2016 |
| | | KR | 10-1858760 | B1 | 16 May 2018 |
| | | KR | 10-1890971 | B1 | 22 August 2018 |
| | | KR | 10-2006-0125852 | A | 06 December 2006 |
| | | KR | 10-2010-0113553 | A | 21 October 2010 |
| | | KR | 10-2011-0052594 | A | 18 May 2011 |
| | | KR | 10-2012-0061932 | A | 13 June 2012 |
| | | KR | 10-2012-0065367 | A | 20 June 2012 |
| | | KR | 10-2014-0014169 | A | 05 February 2014 |
| | | KR | 10-2014-0039234 | A | 01 April 2014 |
| | | KR | 10-2017-0026653 | A | 08 March 2017 |
| | | KR | 10-2019-0062623 | A | 05 June 2019 |
| | | KR | 10-2170047 | B1 | 27 October 2020 |
| | | US | 10297827 | B2 | 21 May 2019 |
| | | US | 10312545 | B2 | 04 June 2019 |
| | | US | 10320027 | B2 | 11 June 2019 |
| | | US | 10333149 | B2 | 25 June 2019 |
| | | US | 10629947 | B2 | 21 April 2020 |
| | | US | 10854921 | B2 | 01 December 2020 |
| | | US | 11108076 | B2 | 31 August 2021 |
| | | US | 11108077 | B2 | 31 August 2021 |
| | | US | 11121397 | B2 | 14 September 2021 |
| | | US | 11233243 | B2 | 25 January 2022 |
| | | US | 2005-0147891 | A1 | 07 July 2005 |
| | | US | 2007-0082270 | A1 | 12 April 2007 |
| | | US | 2008-0187840 | A1 | 07 August 2008 |
| | | US | 2008-0193835 | A1 | 14 August 2008 |
| | | US | 2010-0035128 | A1 | 11 February 2010 |
| | | US | 2010-0239914 | A1 | 23 September 2010 |
| | | US | 2011-0006738 | A1 | 13 January 2011 |
| | | US | 2011-0008531 | A1 | 13 January 2011 |
| | | US | 2011-0059361 | A1 | 10 March 2011 |
| | | US | 2011-0068001 | A1 | 24 March 2011 |
| | | US | 2011-0070491 | A1 | 24 March 2011 |
| | | US | 2011-0070494 | A1 | 24 March 2011 |
| | | US | 2011-0076560 | A1 | 31 March 2011 |
| | | US | 2011-0177398 | A1 | 21 July 2011 |

Form PCT/ISA/210 (patent family annex) (July 2022)

## INTERNATIONAL SEARCH REPORT
### Information on patent family members

| International application No. |
| --- |
| **PCT/KR2023/001147** |

| Patent document cited in search report | Publication date (day/month/year) | Patent family member(s) | | | Publication date (day/month/year) |
| --- | --- | --- | --- | --- | --- |
| | | US | 2011-0206992 | A1 | 25 August 2011 |
| | | US | 2011-0256450 | A1 | 20 October 2011 |
| | | US | 2011-0287305 | A1 | 24 November 2011 |
| | | US | 2012-0070746 | A1 | 22 March 2012 |
| | | US | 2013-0059193 | A1 | 07 March 2013 |
| | | US | 2013-0316072 | A1 | 28 November 2013 |
| | | US | 2014-0079994 | A1 | 20 March 2014 |
| | | US | 2014-0255759 | A1 | 11 September 2014 |
| | | US | 2014-0335399 | A1 | 13 November 2014 |
| | | US | 2015-0155550 | A1 | 04 June 2015 |
| | | US | 2015-0180084 | A1 | 25 June 2015 |
| | | US | 2018-0048018 | A1 | 15 February 2018 |
| | | US | 2018-0108946 | A1 | 19 April 2018 |
| | | US | 2018-0269520 | A1 | 20 September 2018 |
| | | US | 2019-0207216 | A1 | 04 July 2019 |
| | | US | 2019-0267632 | A1 | 29 August 2019 |
| | | US | 2019-0386334 | A1 | 19 December 2019 |
| | | US | 2020-0091547 | A1 | 19 March 2020 |
| | | US | 2020-0220205 | A1 | 09 July 2020 |
| | | US | 2020-0313225 | A1 | 01 October 2020 |
| | | US | 2022-0029191 | A1 | 27 January 2022 |
| | | US | 7354680 | B2 | 08 April 2008 |
| | | US | 7553590 | B2 | 30 June 2009 |
| | | US | 7842421 | B2 | 30 November 2010 |
| | | US | 8735002 | B2 | 27 May 2014 |
| | | US | 8828610 | B2 | 09 September 2014 |
| | | US | 9005809 | B2 | 14 April 2015 |
| | | US | 9034421 | B2 | 19 May 2015 |
| | | US | 9105938 | B2 | 11 August 2015 |
| | | US | 9419274 | B2 | 16 August 2016 |
| | | US | 9716291 | B2 | 25 July 2017 |
| | | US | 9780404 | B2 | 03 October 2017 |
| | | US | 9847550 | B2 | 19 December 2017 |
| | | WO | 2005-069404 | A2 | 28 July 2005 |
| | | WO | 2005-069404 | A3 | 15 June 2006 |
| | | WO | 2009-042071 | A2 | 02 April 2009 |
| | | WO | 2009-042071 | A3 | 14 May 2009 |
| | | WO | 2009-042071 | A9 | 02 July 2009 |
| | | WO | 2009-089018 | A2 | 16 July 2009 |
| | | WO | 2009-089018 | A3 | 08 October 2009 |
| | | WO | 2010-016881 | A1 | 11 February 2010 |
| | | WO | 2010-107499 | A2 | 23 September 2010 |
| | | WO | 2010-107499 | A3 | 24 February 2011 |
| | | WO | 2011-028251 | A2 | 10 March 2011 |
| | | WO | 2011-028251 | A3 | 14 July 2011 |
| | | WO | 2011-031297 | A2 | 17 March 2011 |
| | | WO | 2011-031297 | A3 | 21 July 2011 |
| | | WO | 2012-116156 | A2 | 30 August 2012 |
| | | WO | 2012-116156 | A3 | 22 November 2012 |
| | | WO | 2012-161989 | A1 | 29 November 2012 |

Form PCT/ISA/210 (patent family annex) (July 2022)

**INTERNATIONAL SEARCH REPORT**
**Information on patent family members**

International application No.

**PCT/KR2023/001147**

| Patent document cited in search report | | Publication date (day/month/year) | Patent family member(s) | | | Publication date (day/month/year) |
|---|---|---|---|---|---|---|
| KR 10-2005-0038895 | A | 29 April 2005 | KR | 10-0570606 | B1 | 12 April 2006 |
| KR 10-2008-0044101 | A | 20 May 2008 | KR | 10-0852467 | B1 | 18 August 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220110382